# EUROPEAN PATENT SPECIFICATION

(11) **EP 1 739 991 B1**
(45) Date of publication and mention of the grant of the patent: **02.10.2019**
(21) Application number: 05254146.3
(22) Date of filing: 01.07.2005
(51) Int. Cl.: H04W 48/18

(54) **System and method for accelerating network selection by a wireless user equipment device using satellite based positioning system**
System und Methode zur beschleunigten Netzauswahl einer Mobilstation unter Nutzung eines satellitenbasierten Positionierungssystem
Système et méthode pour accélérer la sélection d'un réseau d'un terminal mobile utilisant un système de positionnement par satellite

(43) Date of publication of application: 03.01.2007
(60) Divisional application: 06126929.6
(73) Proprietor: BlackBerry Limited, Waterloo, ON N2K 0A7 (CA)
(72) Inventor: Buckley, Adrian, Tracy, Ca 95376 (US); Henderson, Gregory Scott, Plano, TX 75075 (US)
(74) Representative: Hibbert, Juliet Jane Grace

(56) References cited:
- WO-A-2004/081600
- GB-A- 2 353 648
- US-A1- 2001 006 892
- US-A1- 2002 082 044
- US-A1- 2003 118 015
- US-A1- 2004 165 657
- US-A1- 2004 249 915

## Description

### REFERENCE TO RELATED APPLICATION(S)

This application discloses subject matter related to the subject matter disclosed in the following commonly owned co-pending U.S. patent application(s): (i) "SYSTEM AND METHOD FOR PROVIDING NETWORK ADVERTISEMENT INFORMATION VIA A NETWORK ADVERTISEMENT BROKER (NAB)," filed April 28, 2005; Application No. 11/116,470, in the name(s) of: Adrian Buckley, Paul Carpenter, Nicholas P. Alfano, and Andrew Allen (Attorney Docket No. 1400-1036US); (ii) "NETWORK SELECTION SCHEME USING A ROAMING BROKER (RB)," filed April 28, 2005; Application No. 11/116,461, in the name(s) of: Adrian Buckley, Paul Carpenter, Nicholas P. Alfano, and Andrew Allen (Attorney Docket No. 1400-1037US); (iii) "SYSTEM AND METHOD FOR ACCELERATING NETWORK SELECTION BY A WIRELESS USER EQUIPMENT (UE) DEVICE," filed even date herewith; Application No._, in the name(s) of: Adrian Buckley, Andrew Allen and G. Scott Henderson (Attorney Docket No. 1400-1041 US).

### FIELD OF THE DISCLOSURE

The present patent disclosure generally relates to communication networks. More particularly, and not by way of any limitation, the present patent application is directed to a system and method for accelerating network selection by a wireless user equipment (UE) device using a satellite-based positioning system (SBPS).

### BACKGROUND

When a wireless user equipment (UE) device is first powered up or when it tries to recover from loss of coverage, it is typically required to search for its last registered Public Land Mobile Network (RPLMN) in every supported radio access technology and frequency bands associated therewith before attempting to register on another PLMN. The issue for operators is that when a UE device loses coverage from its home PLMN, it may have to perform a full band scan (FBS) of all supported bands before possibly selecting a National Roaming Partner (NRP). Today, such a full scan already takes a fairly long time in a dense or complex radio environment, which will be further exacerbated when additional frequency bands are introduced and more access technologies are integrated.

In addition, it is important to note that in most scenarios a full band scan can give rise to inefficient utilization of radio resources. Relatedly, the time to perform a full scan may be so long that the radio environment may have changed significantly between the time when the scan was started and the time the UE device decides to select a new PLMN. As a result, by the time the UE decides to select a new network, another high priority network may have appeared again.

US2004/249915 describes a wireless device that uses Global Positioning System (GPS) data, or other position-indicating data, to determine its location in relation to multilayered wireless networks that the device may see concurrently. If location information is available, the device employs a user-defined priority table to select the order of user-contracted networks available at that location in which the device will register. If location information is unavailable, the device employs a technology priority table to select Common Air Interface (CAI) options for the device radio parameters (e.g., GSM, cdma2000, IS-136, IEEE 802.11x, etc.) to search for an available network to access. Information is gathered and stored in databases within the invention device allowing it to be registered in multiple wireless networks.

US2002082044 describes a system for communicating over a plurality of wireless data networks, the system comprising a software defined radio capable of being configured to operate with a plurality of wireless network services; a radio controller for reconfiguring the radio to operate over a wireless data network; a first database containing information about wireless data networks; wireless location technology used to determine a location of the radio; wherein the wireless location technology determines a location of the radio and the controller compares the location with information contained in the first database to determine available wireless data networks.

US2001006892 describes a frequency scanning radio receiver that scans and receives transmissions on discrete radio frequencies. The frequency scanning radio receiver is programmable to monitor frequencies in a geographical area where the receiver is located. The receiver is coupled to a communication device, located externally or internally of the receiver, for communication with a positioning system, such as the global positioning system, to determine the geographical location of the frequency scanning radio receiver either automatically or in response to a manual request. A data base of frequency allocation data, either internal to the radio or in a remotely located host system, provides frequency data to a memory in the frequency scanning radio receiver based on geographical location of the receiver determined through the communication device to program the receiver to monitor local radio frequency transmissions.

### SUMMARY

In one embodiment, the present disclosure is directed to a method for accelerating network selection by a wireless UE device, comprising one or more of the following operations: determining the wireless UE device's location by using a satellite-based positioning system (SBPS); determining if the wireless UE device's location is within an area defined by a plurality of corners, each corner being defined as a longitude coordinate and a latitude coordinate; based on determining that the wireless UE device's location is within a particular area, applying a subset of appropriate frequency data for selective scanning by the wireless UE device; and locating a network via selective scanning by the wireless UE device using the subset of appropriate frequency data.

In another embodiment, the present disclosure is directed to a wireless UE device, comprising one or more of the following elements: a receiver operable to facilitate determination of the wireless UE device's location by using appropriate SBPS signaling; a logic structure for determining if the wireless UE device's location is within an area defined by a plurality of corners, each corner being defined as a longitude coordinate and a latitude coordinate; a logic structure for selecting, based on determining that the wireless UE device's location is within a particular area, a subset of appropriate frequency data for selective scanning by the wireless UE device; and a logic structure for locating a network via selective scanning by the wireless device using the subset of appropriate frequency data.

In another embodiment, the present disclosure is directed to a system for accelerating network selection by a wireless UE device, comprising one or more of the following elements: means for determining the wireless UE device's location by using SBPS; means for determining if the wireless UE device's location is within an area defined by a plurality of corners, each corner being defined as a longitude coordinate and a latitude coordinate; means for selecting, based on determining that the wireless UE device's location is within a particular area, a subset of appropriate frequency data for selective scanning by the wireless UE device; and means for locating a network via selective scanning by the wireless UE device using subset of appropriate frequency data.

In an example, the present disclosure is directed to a removable storage module (RSM) operable to be coupled to a wireless device, comprising one or more of the following elements: a database structure populated with a plurality of geographic areas, each being identified with a set of corners that are specified in terms of longitude and latitude coordinates, wherein each geographic area is associated with a corresponding frequency data item operable to be downloaded to the wireless device; and a logic application operable for downloading to the wireless device a particular frequency data item responsive to receiving a location indication indicative of the wireless device's position, the particular frequency data item for modulating the wireless device's scanning behavior. Preferably, the particular frequency data item is determined by determining in which geographic area the wireless device is located.

In yet another example, the present disclosure is directed to a scheme and associated structure for accelerating network selection by a wireless UE device, comprising one or more of the following operations: providing a modified data channel associated with SBPS from a repeater to the wireless UE device, wherein the modified data channel includes frequency data relating to locally available networks; upon receiving the modified GPS data channel, decoding the modified data channel by the wireless UE device to determine a subset of appropriate frequency data for selective scanning; and locating a network for service by the wireless UE device via selective scanning using the subset of appropriate frequency data.

Relatedly, in a still further example, the present disclosure is directed to a wireless UE device operable to accelerate network selection, comprising one or more of the following elements: means for decoding a modified SBPS data channel broadcast from a repeater to the wireless UE device, the modified data channel including frequency data; means for determining a subset of appropriate frequency data for selective scanning; and means for locating a network for service via selective scanning using the subset of appropriate frequency data.

### BRIEF DESCRIPTION OF THE DRAWINGS

A more complete understanding of the embodiments of the present patent disclosure may be had by reference to the following Detailed Description when taken in conjunction with the accompanying drawings wherein:
FIG. 1 depicts a generalized network environment wherein an embodiment of the present patent disclosure may be practiced;
FIG. 2 depicts an exemplary embodiment of a network environment where a wireless user equipment (UE) device is operable to accelerate network selection in accordance with the teachings of the present patent disclosure;
FIGS. 3-7 depict various exemplary database structures provided for facilitating accelerated network selection by a wireless UE device in accordance with one embodiment of the present patent disclosure;
FIGS. 8A-8E depict additional exemplary database structures that may be utilized by a UE device for facilitating accelerated network selection;
FIG. 9 depicts another presently preferred exemplary embodiment of a database structure that may be utilized by a wireless UE device for facilitating accelerated network selection in accordance with the teachings of the present patent disclosure;
FIG. 10 is a flowchart associated with an embodiment of a scheme for accelerating network selection using satellite-based positioning data;
FIG. 11 is another exemplary scheme for facilitating accelerated network selection in accordance with the teachings of the present patent disclosure;
FIG. 12 depict a flowchart associated with a further embodiment of the present patent disclosure; and
FIG. 13 depicts a block diagram of an embodiment of a wireless UE device operable to accelerate network selection according to the teachings of the present patent disclosure.

### DETAILED DESCRIPTION OF THE DRAWINGS

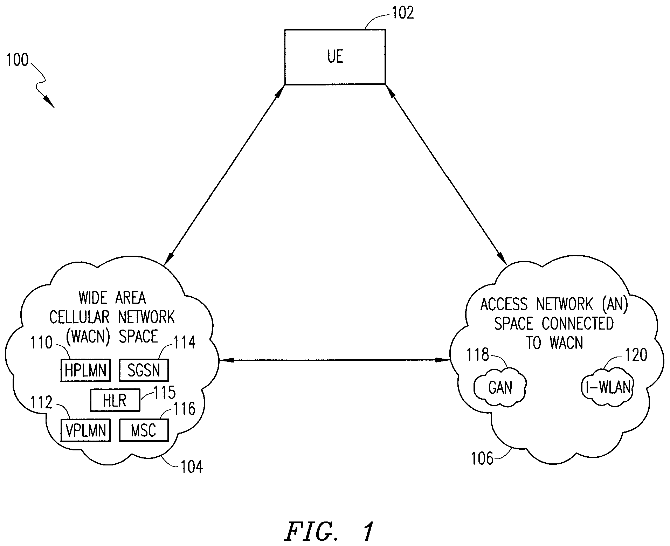

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an exemplary generalized network environment 100 wherein one or more embodiments of the present patent disclosure may be practiced. A generalized wireless user equipment (UE) or mobile equipment (ME) device 102 may comprise any portable computer (e.g., laptops, palmtops, or handheld computing devices) or a mobile communications device (e.g., cellular phones or data-enabled handheld devices capable of receiving and sending messages, web browsing, et cetera), or any enhanced personal digital assistant (PDA) device or integrated information appliance capable of email, video mail, Internet access, corporate data access, messaging, calendaring and scheduling, information management, and the like, that is preferably operable in one or more modes of operation and in a number of frequency bands and/or radio access technologies (RATs). For example, UE/ME device 102 may operate in the cellular telephony band frequencies as well as Wireless Local Area Network (WLAN) bands. Further, other bands in which the UE device could operate wirelessly may comprise Wi-Max bands or one or more satellite bands. Accordingly, for purposes of the present patent disclosure, those skilled in the art should recognize that the term "UE device" or "wireless device" may comprise a mobile equipment (ME) device (with or without any removable storage module or RSM such as a Universal Subscriber Identity Module (USIM) card, Removable User Identity Module (RUIM) card, a Subscriber Identity Module (SIM) card, or a compact Flash card, etc.) as well as other portable wireless information appliances, also with or without such RSMs.

By way of illustration, the network environment 100 is envisioned as two broad categories of communication spaces capable of providing service to UE device 102 wherein acquisition of network advertisement information may be accomplished in accordance with the teachings set forth herein. In wide area cellular network (WACN) space 104, there may exist any number of Public Land Mobile Networks (PLMNs) that are operable to provide cellular telephony services which may or may not include packet-switched data services. Depending on the coverage area(s) and whether the user is roaming, WACN space 104 can include a number of home networks 110 (i.e., home PLMNs or HPLMNs, or equivalent HPLMNs or EHPLMNs), visited networks (i.e., VPLMNs) 112, each with appropriate infrastructure such as Home Location Register (HLR) nodes 115, Mobile Switching Center (MSC) nodes 116, and the like. Since the WACN space 104 may also include a General Packet Radio Service (GPRS) network that provides a packet radio access for mobile devices using the cellular infrastructure of a Global System for Mobile Communications (GSM)-based carrier network, a Serving GPRS Support Node (SGSN) 114 is exemplified therein. Additionally, by way of generalization, the PLMNs of the WACN space 104 may comprise radio access and core networks selected from the group comprising Enhanced Data Rates for GSM Evolution (EDGE) networks, Integrated Digital Enhanced Networks (IDENs), Code Division Multiple Access (CDMA) networks, Time Division Multiple Access (TDMA) networks, Universal Mobile Telecommunications System (UMTS) networks, or any 3^{rd} Generation Partnership Project (3GPP)-compliant network (e.g., 3GPP or 3GPP2), all operating with well known frequency bandwidths and protocols. That is, at least in some embodiments, the term "PLMN" may be deemed to represent various cellular and wireless technologies (e.g., WLAN, WiMax, public safety network implementations, etc.).

Further, UE device 102 is operable to obtain service from an access network (AN) space 106 that is connected to the WACN space 104. In one implementation, the AN space 106 includes one or more generic access networks (GANs) 118 as well as any type of wireless LAN (WLAN) arrangements 120, both of which may be generalized as any wireless AN that is operable to provide access services between UE device 102 and a PLMN core network using a broadband Internet Protocol (IP)-based network. WLAN arrangements 120 provide short-range wireless connectivity to UE device 102 via access points (APs) or "hot spots," and can be implemented using a variety of standards, e.g., IEEE 802.11b, IEEE 802.11a, IEEE 802.11g, HiperLan and HiperLan II standards, Wi-Max standard (IEEE 802.16 and IEEE 802.16e), OpenAir standard, and the Bluetooth standard (IEEE 802.15).

In one embodiment, interfacing between the WACN and AN spaces may be effectuated in accordance with certain standards. For instance, GAN 118 may be interfaced with one or more PLMNs using the procedures set forth in the 3GPP TR 43.901, 3GPP TS 43.318 and 3GPP TS 44.318 documents as well as related documentation. Likewise, WLAN 120 may be interfaced with at least one PLMN core using the procedures set forth in the 3GPP TS 22.234, 3GPP TS 23.234 and 3GPP TS 24.234 documents as well as related documentation, and may therefore be referred to as an Interworking WLAN (I-WLAN) arrangement.

Based on the foregoing, it should be recognized that the service infrastructure of the network environment 100 may be generalized into three broad segments: one or more radio access networks (RANs) (which can include cellular band technologies as well as WLAN technologies), one or more core networks (CNs), and one or more service networks (SNs). Depending on network ownership arrangements and service-level agreements, each RAN may support one or more CNs, each of which in turn may support one or more SNs. Such combinations of infrastructure equipment across multiple owners are sometimes used to create Mobile Virtual Network Operators (MVNOs). In some embodiments, the teachings of the present patent disclosure are equally applicable to MVNOs as to PLMNs. Since each RAN, CN, or SN may be provided with its own network identifier (ID code), numerous RAN-CN-SN combinations may be available in the network environment 100. As will be seen below, various network lists and associated data (e.g., user- or operator-preferred networks (access or visited), user- or operator-prohibited networks (access or visited), lists of network capabilities, frequency data (bands, channels, frequencies, etc.) associated with the listed networks) may be provisioned in the network environment or as part of an RSM (i.e., a module selected from USIM cards, RUIM cards, SIM cards, or compact Flash cards, etc.) operable with the UE device or in the network, which could be provided to the UE device or stored in a memory integrated within the device in a customized manner for facilitating accelerated network selection so that a time-consuming FBS procedure may be avoided while attempting to locate a network for service in the exemplary network environment.

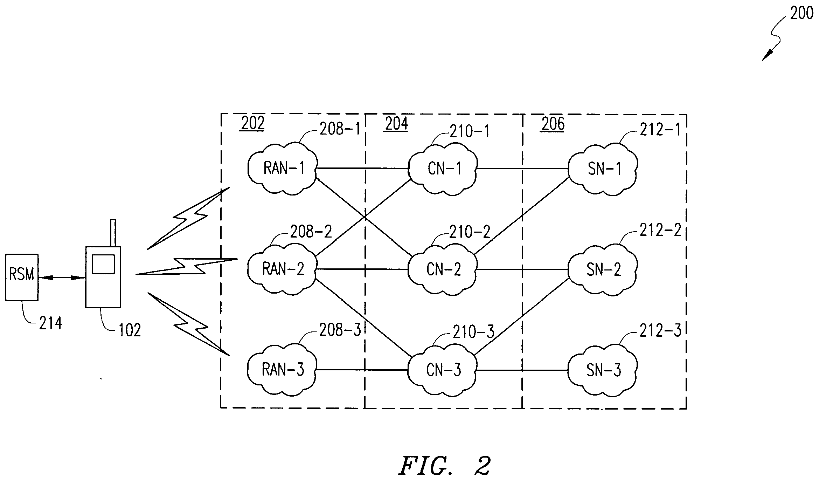

To formalize the teachings of the present disclosure, reference is now taken to FIG. 2 wherein an exemplary embodiment of a network environment 200 is shown that is a more concrete subset of the generalized network environment 100 illustrated in FIG. 1. As depicted, wireless UE/ME device 102 is operably disposed for acquiring network advertisement information via scanning from a RAN segment 202 that is coupled to a CN segment 204 which in turn is coupled to an SN segment 206. Three RANs are illustrative: RAN-1 208-1, RAN-2 208-2 and RAN-3 208-3, which are identified with the network codes MANC1, MANC2 and MANC3, respectively. The CN segment 204 is also illustrated with three CNs: CN-1 210-1 (having an ID code of MCNC1), CN-2 210-2 (having an ID code of MCNC2) and CN-3 210-3 (having an ID code of MCNC3). Likewise, the SN segment 206 is illustrated with SN-1 212-1 (having an ID code of MSNC1), SN-2 212-2 (having an ID code of MSNC2) and SN-3 212-3 (having an ID code of MSNC3).

By way of example, RAN-1 208-1 is operable to support connectivity to two CNs, CN-1 210-1 and CN-2 210-2. In similar fashion, RAN-2 208-2 supports three CNs and RAN-3 208-3 supports only one CN. Each CN supports connectivity to one or more SNs: e.g., CN-3 210-3 connects to SN-2 212-2 as well as SN-3 212-3. Given the interconnectivity of the RAN/CN/SN segments, several combinations of identification codes may be obtained for purposes of uniquely identifying the various RAN-CN-SN combinations that the wireless UE device 102 can potentially discover and select from. For instance, with a suitable Mobile Country Code (MCC) being included, the three ID code combinations associated with RAN-1 208-1 are:
[MCC.MANC1.MCNC1.MSNC1];
[MCC.MANC1.MCNC1.MSNC2]; and
[MCC.MANC1.MCNC2.MSNC2].

Likewise, the ID code combinations associated with RAN-2 208-2 are:
[MCC.MANC2.MCNC1.MSNC1];
[MCC.MANC2.MCNC1.MSNC2];
[MCC.MANC2.MCNC2.MSNC2];
[MCC.MANC2.MCNC3.MSNC2]; and
[MCC.MANC2.MCNC3.MSNC3].

The two ID code combinations associated with RAN-3 208-3 are: [MCC.MANC3.MCNC3.MSNC2] and [MCC.MANC3.MCNC3.MSNC2]. As described in detail in the related U.S. patent application entitled "SYSTEM AND METHOD FOR PROVIDING NETWORK ADVERTISEMENT INFORMATION VIA A NETWORK ADVERTISEMENT BROKER (NAB)," filed April 28, 2005; Application No. 11/116,470, (Attorney Docket No. 1400-1036US) and referenced hereinabove, the UE device can discover applicable network ID code information either in an initial scan procedure (i.e., when the device is not registered on any networks) or in a background scan procedure (i.e. when the device is registered on a network).

Given the diversity of the exemplary network environment 100 described earlier with respect to FIG. 1, it is envisaged that scanning may be effectuated in a frequency band in which at least one of the following technologies is operating: GERAN (without EDGE), GERAN (with EDGE), an IDEN network, a CDMA/CDMA2000/TDMA network, a UMTS network, and so on. Additionally, where WLAN access capability is included, scanning may be effectuated in a frequency band compliant with a WLAN standard selected from: IEEE 802.11b standard, IEEE 802.11a standard, IEEE 802.11g standard, HiperLan standard, HiperLan II standard, Wi-Max standard, OpenAir standard, and Bluetooth standard.

An RSM card 214 is operable to be coupled to UE/ME device 102, wherein a number of network lists and associated frequency data may be provisioned by network operators, etc. When an RSM is present and the UE device is first turned on, the storage module(s) of the UE device may be updated with any information stored in the RSM. Thus, in one embodiment, the RSM could be programmed with the most current frequency information when it is supplied to a subscriber. The data in the RSM may, for example, add extra frequencies to the default list of frequencies, or raster of frequencies, stored in the device for searching or scanning. Alternatively or additionally, the data in the RSM may modify the frequency data items already stored in the device so that those frequencies which are not to be used could be removed, or marked in a way that they are not to be scanned as part of a search strategy. As will be seen below, suitable database structures may be provisioned in the RSM or in the memory of a wireless device for storing applicable frequency data mapped to geographic areas, network list data, among others. Furthermore, additional database structures may be provisioned as well for purposes of accelerating network selection accordance with the teachings of the present disclosure.

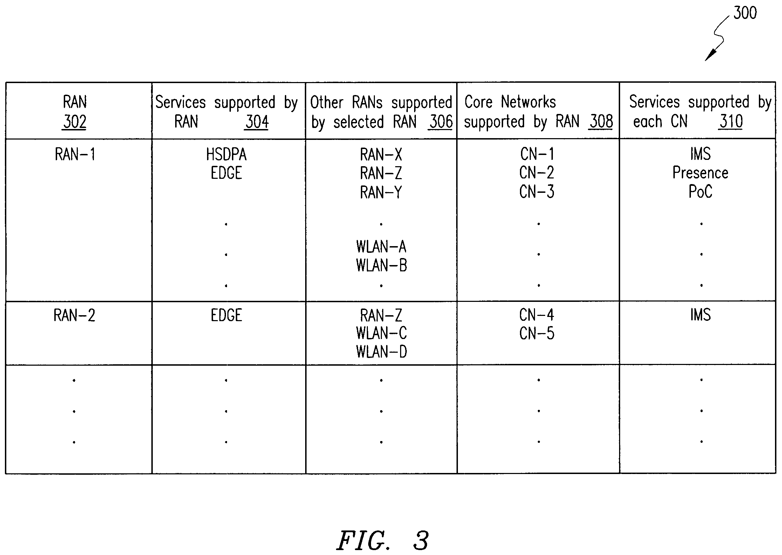

Referring now to FIGS. 3-7, depicted therein are various exemplary database structures that may be provided, either individually or in any combination, as part of an RSM, or stored in memory integrated within a UE device, or provisioned at a network node (e.g., a home network node or a broker associated therewith) from which network list information may be selectively downloaded to a UE device in accordance with the teachings of the present patent disclosure. At the outset, it should be appreciated that the various exemplary database structures set forth in the present patent disclosure may typically be implemented as configurable databases where the entries, elements or other contents can be modified via over-the-air (OTA) methods. For example, a network operator can add, delete, or modify any portion of the relevant network list databases. Taking reference to FIG. 3 in particular, reference numeral therein refers to a RAN-based data structure wherein service capabilities, connectivity to other RANs and supported PLMN core networks, et cetera, are provided. Those skilled in the art will recognize that based on the scope of coverage of the database as well as any third-party commercial arrangements, the database structure 300 may be populated with the data entries pertaining to a fairly large number of RANs. Reference numeral 302 refers to one or more RANs identified by their RAN ID codes. Services supported by each RAN are identified in column 304. For example, RAN-1 is operable to support High Speed Datalink Packet Access (HSDPA), EDGE, and the like. Cross-relationship or interoperability of a particular RAN with other access networks is indicated in column 306. As illustrated, RAN-1 interoperates with additional RANs, RAN-X, RAN-Y, and RAN-Z, as well as WLANs, WLAN-A and WLAN-C. Reference numeral 308 refers to the core networks supported by each particular RAN identified in column 302. Reference numeral 310 refers to the various services supported by each CN, such as, e.g., IP Multimedia Subsystem (IMS), Presence, Push-to-Talk over Cellular (PoC), and the like.

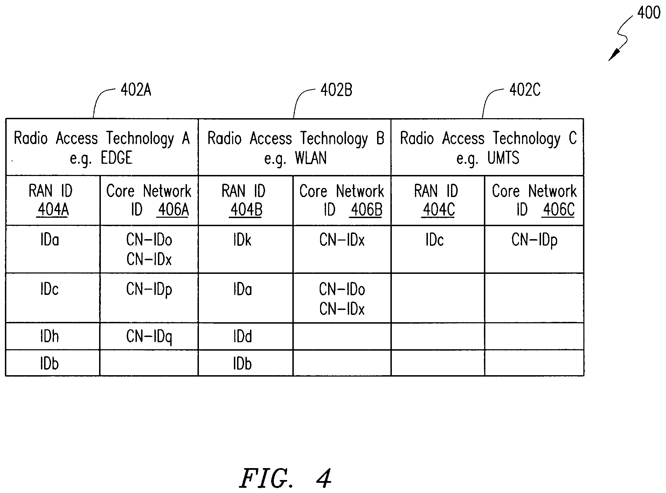

FIG. 4 depicts an exemplary database structure 400 that may be provided as an operated-based list, a user-based list or an enterprise-based list, or any combination thereof, that may be downloaded to a UE device for facilitating network selection preferences and prohibitions according to one aspect of the present patent disclosure. In one embodiment, the database structure 400 is configured as an operator-defined network list that specifies a plurality of network IDs which should be considered as preferred networks in one or more radio access technologies, wherein the network IDs are populated by the operator. In another embodiment, the database structure 400 may be configured as one or more user network lists, with one list per user using the wireless UE device, for example. Each such list may be accessed by the users upon identifying themselves to the device, wherein the contents of the list (i.e., network IDs) are populated by the respective users. In yet another embodiment, the database structure 400 may be configured as a list of network IDs that are preferred by an enterprise owning the wireless devices for the benefit of its employee-users.

Irrespective of the particular configuration, the database structure 400 defines a plurality of radio access technologies, e.g., EDGE technology 402A, WLAN technology 402B, and UMTS technology 402C, wherein a number of RAN IDs are provided for each technology. As illustrated in FIG. 4, column 404A identifies multiple RAN IDs for the EDGE technology, each RAN supporting one or more core networks identified in corresponding column 406A. Likewise, columns 404B/406B and columns 404C/406C are provided for the WLAN and UMTS technologies respectively. As one skilled in the art may appreciate, the various IDs can be Service Set IDs (SSIDs) (for WLAN), SIDs (for IS-95 and IS-136), or [MCC,MNC] combinations (for GSM, where MNC identifies a Mobile Network Code).

Similar to the network preference lists set forth above, an analogous database structure may be provided that identifies one or more networks that are forbidden for use. Such a list of prohibited networks may be configured as, for example, an operator-barred RAN list (i.e., specified by an operator), enterprise-barred RAN list (i.e., specified by an enterprise), operator-barred CN list (i.e., specified by an operator), and enterprise-barred CN list (i.e., specified by an enterprise).

In addition to one or more of the embodiments and configurations of the database structures identifying network preferences and prohibitions, one or more home network lists (including equivalent home networks or EHPLMNs) may be provided for facilitating network selection. As is well known, each of the wide area cellular PLMNs may be arranged as a number of cells, with each cell having sectors (e.g., typically three 120-degree sectors per base station (BS) or cell). Each individual cell is provided with an identifier, e.g., CGI parameter in GSM networks, to identify them. Also in GSM, a group of cells is commonly designated as a Location Area (LA) and may be identified by an LA Identifier (LAI). At the macro level, the PLMNs may be identified in accordance with the underlying cellular technology. For example, as alluded to before, GSM-based PLMNs may be identified by an identifier comprised of a combination of MCC and MNC. The CDMA/TDMA-based PLMNs may be identified by a System Identification (SID) parameter and/or a Network Identification (NID) parameter. Regardless of the cellular infrastructure, all cells broadcast the macro level PLMN identifiers such that a wireless device (e.g., UE device 102) wishing to obtain service can identify the wireless network.

Additionally, a subscriber is also given a unique identifier which can vary depending on the underlying cellular infrastructure and may be constructed at least in part from some of the parametrics that are used in constructing the network identifiers. In GSM, for example, the subscriber's IMSI parameter is constructed as [MCC][MNC][MIN], where [MCC] identifies the country that the subscriber is from, [MNC] identifies the PLMN network, and [MIN] is the unique ID that identifies the wireless UE device).

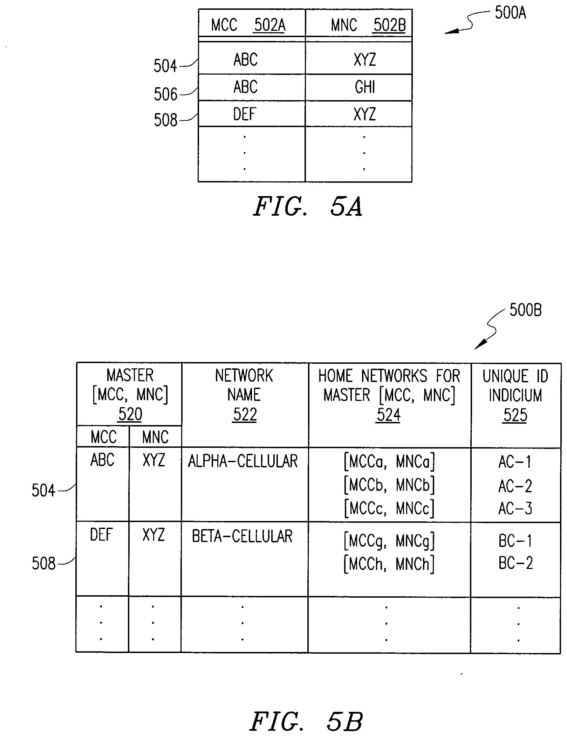

FIGS. 5A and 5B depict exemplary database structures which may be provisioned in an RSM or stored in the UE/ME device for specifying various EHPLMNs in connection with facilitating network selection according to one embodiment. Reference numeral 500A refers to a basic database structure that comprises a list of [MCC] 502A and [MNC] 502B combinations that may be identified as being the same networks. In the case of equivalent networks, the [MCC] [MNC] combinations may identify a set of EHPLMNs for the IMSI associated with the subscriber. Reference numerals 504, 506 and 508 refer to three exemplary networks, wherein networks 504 and 506 share the same [MCC], i.e., [ABC], and networks 504 and 508 share the same [MNC] (i.e., [XYZ]).

Reference numeral 500B refers to an enhanced database structure where additional information may be provided for facilitating network selection. A Master [MCC] [MNC] column 520 identifies the [MCC] and [MNC] combinations that match the IMSI's [MCC]/[MNC] part (i.e., Master Home PLMN). A network name column 522 identifies the master network by name. A home network (E/HPLMN) column 524 includes a list of home networks for each of the Master [MCC][MNC] pairs. In one implementation, the [MCC][MNC] combinations identifying the home networks may be provided in a priority order. For example, a positional priority may be implemented wherein an [MCC][MNC] combination at the top has a higher priority over the one below it, or an [MCC][MNC] combination to the left has a higher priority over the one to the right. An explicit priority ranking may also be provided wherein an indicator indicating the priority of the PLMN is appended to the database structure 500B. For instance, a value of [0] may indicate the highest priority. Where there is no priority indicator stored, all PLMNs have equal priority. An indicium column 525 is provided for uniquely identifying each PLMN listed in the home network list 524, wherein the indicium may comprise a unique identity name that can include some reference to the Master [MCC] [MNC] pair or the network name associated therewith.

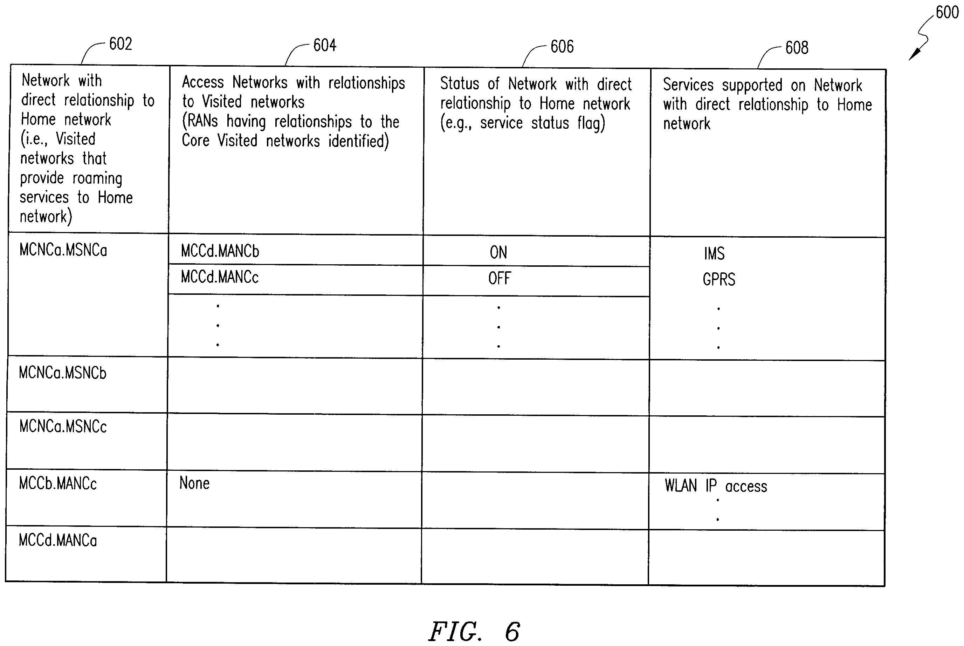

FIG. 6 depicts another exemplary database structure 600 wherein reference numeral 602 refers to a column of networks that have direct visitor relationships to one or more home networks (including equivalent home networks) defined for a wireless UE device and/or subscriber. In other words, the networks identified in column 602 are visited networks that provide roaming services to the home networks. As illustrated, these visited networks may comprise just the access networks (e.g., access networks identified as [MCCb.MANCc] and [MCCd.MANCa]) as well as network combinations that can include CNs and SNs. Column 604 identifies access networks having with relationships with the visited core networks identified in column 602. Column 606 provides status information with respect to indicating whether the identified radio/core network combinations are known to be operational. For instance, a service status flag such as "ON" or "OFF" may be provided to indicate if a particular network combination (e.g., a RAN/CN combination) is in service or not. Additionally, column 608 of the RB database structure provides services and capabilities supported on the visited networks that are identified in column 602.

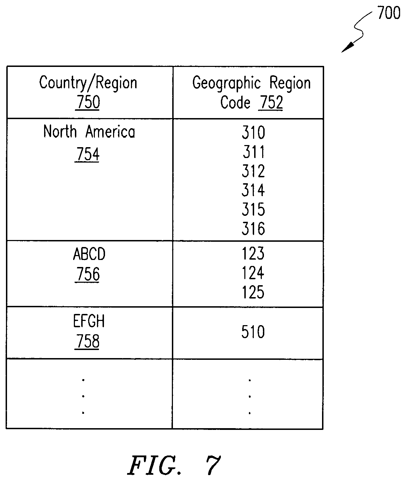

FIG. 7 depicts an exemplary database structure 700 that may be utilized by a UE device for customizing the network lists and associated frequency data so that only a limited number of networks and/or frequencies need to be selectively scanned by the UE device. Illustratively, data structure 700 includes a mapping relationship between various geographic entities 750 (i.e., individual countries and supra-national geographic regions such as North America, the European Union, et cetera) and geographic region codes 752 associated therewith. In an exemplary arrangement, where a region/country has multiple country codes assigned to it, they are stored in such a way that all of them are associated with or otherwise mapped to the single geographic entity, which typically operates under a common mobile communications regulatory regime. It should be appreciated by one skilled in the art that this arrangement allows the wireless UE device to determine what country it is in when examining the country code of a PLMN it has discovered via scanning. By way of example, there are seven [MCC] values, 310 to 316, assigned to North America 754. Another exemplary entity, a single country ABCD 756, may also be provided with multiple [MCC] values, e.g., from 123 to 125. In another example, a geographic entity EFGH 758 is assigned only one [MCC], e.g., 510. As alluded to before, the data structure 700 may be provided as part of a storage module integrated with the wireless UE device.

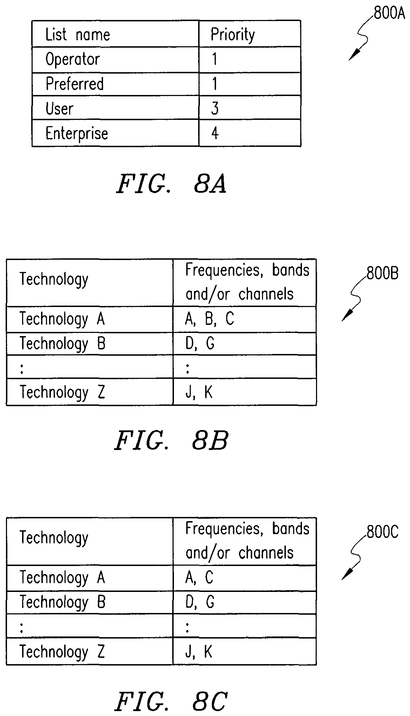

Additionally, the provisioning of various preferred and barred/forbidden network lists may be accompanied with appropriate device logic for specifying the order in which to use them in connection with scanning and network selection. Moreover, each country may have its own regulatory requirements as to which list should take precedence. An enterprise company for instance may forbid access to a public WLAN access point that operates in the vicinity of the company's premises. Additionally, certain device logic may be necessary for specifying the scanning behavior as well, since there may be a number of bands on per-technology basis in which the device is capable of scanning. FIGS. 8A-8E depict additional exemplary database structures or logic for facilitating accelerated network selection in the operation of a wireless UE device. In particular, reference numeral 800A of FIG. 8A refers to a list ordering scheme operable with the device wherein a priority is imposed on the device's various network lists. In FIG. 8B, reference numeral 800B refers to a scheme for specifying initial scan behavior of the device. As illustrated, when the device performs an initial scan, it is provided that Technology A should be scanned in bands A, B, and C. In a GSM implementation, these bands could be selected from, for example, 450 MHz, 700 MHz, 850 MHz, 900 MHz, 1800 MHz, and 1900 MHz. Likewise, Technology B could be CDMA (IS-95) operating in two bands, 850 MHz and 1900 MHz, although additional bands may be added. Although each technology is exemplified with one or more frequency bands in scheme 800B, it should be realized that there may be a technology available with the wireless device in which no scanning bands are specified (e.g., by setting an ON/OFF flag associated with that particular technology or by explicitly not provisioning any band information). Further, the scanning order may be effectuated in serial mode or in parallel mode.

In similar fashion, reference numeral 800C in FIG. 8C refers to a scheme for specifying the device's background scan behavior. As exemplified, when the device performs a background scan, it is provided that Technology A should be scanned in bands A and C. Likewise, Technology B may be scanned in bands D and G. Analogous to the initial scanning process logic, the background scanning scheme 800C may have technologies with no band information provided therefor. As to the background scan interval, it may be configured on the device on a technology-by-technology basis or with a single time parameter for all technologies. In addition, such configuration data may be provided within a fixed memory module of the device or by way of an RSM (e.g., SIM, RUIM, compact Flash, USIM, et cetera), as is the case with respect to the various database structures described elsewhere in the present patent disclosure.

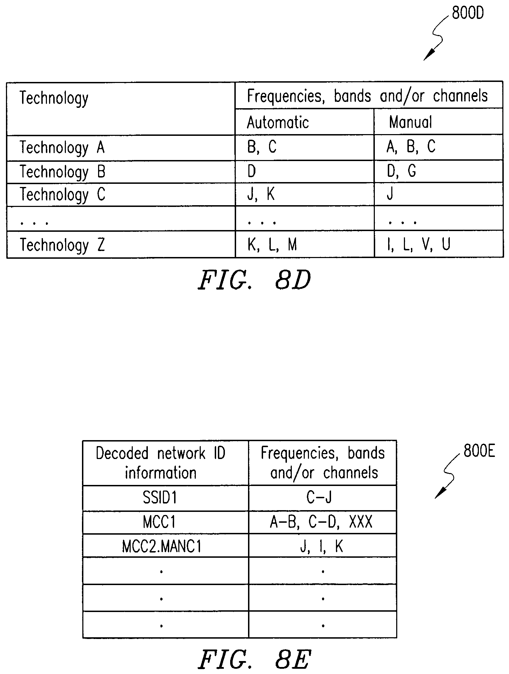

Reference numeral 800D in FIG. 8D depicts a database structure that allows different behavior for manual and automatic network selection. As illustrated, various frequencies, bands and channels (i.e., frequency data items) associated with each technology may be segregated based on whether automatic or manual selection is provisioned. In one implementation, the list of networks in different technologies are presented to the user for selecting. As will be seen in detail hereinbelow, the list of networks may be controlled based on the device's location so that only a small number of appropriate networks may be presented. Upon selecting a particular network by the user, the UE device attempts to register with that network. If registration fails, the same list of networks may be presented to the user, except that the network that failed registration is removed from the new shortlist or otherwise marked with some indication that the network registration was a failure. Additionally, the network list may be presented to the user repeatedly for a number of times, which may be defined by a parameter configured by the operator and stored in the RSM.

Reference numeral 800E in FIG. 8E depicts another database or logic structure which maps information decoded from identity information of networks discovered by a wireless UE device to appropriate frequency data. As illustrated, the decoded network identity information may comprise SSIDs, MCCs, as well as combination codes such as [MCC.MANC] codes. Associated with each code are one or more frequency data items which the wireless UE device may use for selective scanning. As alluded to before, the frequency data may comprise complete bands, sets/ranges of frequencies or channels, etc. Further, the mapping logic may involve fairly complex relationships between the decoded network identity information (including geographic region codes exemplified in the database structure of FIG. 7) and the frequency data. For instance, where no networks have been found in the designated channels or frequencies associated with a particular network code, a "wild card" option may be indicated so that all other frequencies and channels may be scanned for that particular network code. Details regarding these database structures and their utilization may be found in the following commonly owned co-pending U.S. patent applications: (i) "NETWORK SELECTION SCHEME USING A ROAMING BROKER (RB)" filed April 28, 2005; Application No. 11/116,461; (ii) "SYSTEM AND METHOD FOR PROVIDING NETWORK ADVERTISEMENT INFORMATION VIA A NETWORK ADVERTISEMENT BROKER (NAB)" filed April 28, 2005; Application No. 11/116,470; and (iii) "SYSTEM AND METHOD FOR ACCELERATING NETWORK SELECTION BY A WIRELESS USER EQUIPMENT (UE) DEVICE," filed even date herewith; Application No._, in the name(s) of: Adrian Buckley, Andrew Allen and G. Scott Henderson (Attorney Docket No. 1400-1041US); each of which has been referenced hereinabove.

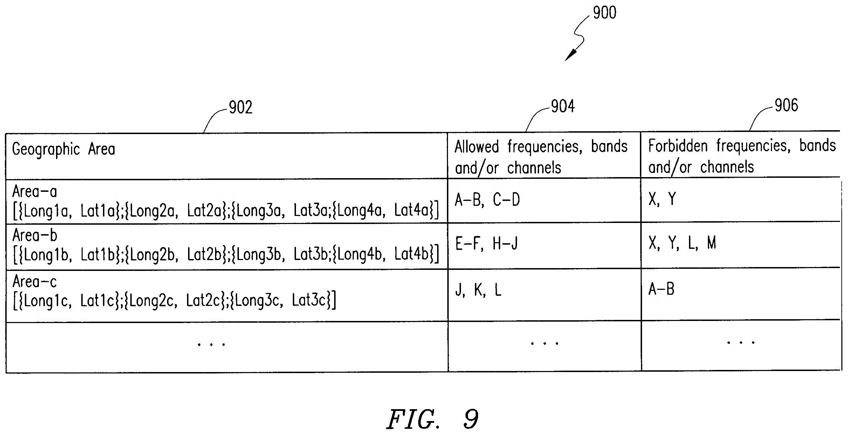

Referring now to FIG. 9, depicted therein a presently preferred exemplary embodiment of a database structure 900, which may be provisioned in an RSM or a wireless device's memory, for facilitating accelerated network selection according to the teachings of the present patent disclosure. As illustrated, a number of geographic areas 902 are preferably configurably defined, each area having three or more corners that are specified in terms of longitude/latitude coordinate pairs. Associated with each geographic area is a list of allowed frequencies, bands and/or channels, i.e., allowed frequency data 904, that a wireless UE may use for selective scanning. In a further modification, at least a portion of the geographic areas 902 may also be associated with a list of forbidden frequencies, bands and/or channels, i.e., disallowed frequency data 906, that a wireless device is barred from using. Those skilled in the art should recognize upon reference hereto that the database structure 900 is capable of a number of modifications and variations such as, e.g., providing only allowed frequency data, different areas for allowed frequency data and disallowed frequency data, as well as interfacing with a number of other database structures described hereinabove.

By way of example, a four-corner geographic area, Area-a, is defined in terms of four longitude/latitude pairs: [{Long1a, Lat1a}; {Long2a, Lat2a}; {Long3a, Lat3a}; {Long4a, Lat4a}], wherein each pair corresponds to a corner. Likewise, a triangular geographic area, Area-c, is defined in terms of three longitude/latitude pairs: [{Longlc, Latlc}; {Long2c, Lat2c}; {Long3c, Lat3c}]. Clearly, geographic areas of various other shapes may also be defined in a similar manner for purposes of the present patent disclosure, wherein lines connecting one corner point to the adjacent corner points determine the boundaries of the areas.

Where an RSM-based implementation is provided, it may be provisioned with a database structure such as, e.g., the database structure 900 or the like, that is populated with a plurality of geographic areas, each being identified with a set of corners (e.g., three or more) that are specified in terms of longitude and latitude coordinates, wherein each geographic area is mapped to or otherwise associated with a corresponding frequency data item (i.e., frequencies, bands, ranges, and/or channels, allowed or disallowed) operable to be downloaded to a wireless device. Also, a suitable logic application may be provisioned as well that is operable for downloading to the wireless device a particular frequency data item responsive to receiving a location indication indicative of the wireless device's position (e.g., via a satellite-based positioning system (SBPS) such as GPS), wherein the particular frequency data item is determined by interrogating the database structure for identifying in which geographic area the wireless device is located. Once the particular frequency data item has been provided to the wireless device, it may be used for modulating the wireless device's scanning behavior so that accelerated network selection is effectuated.

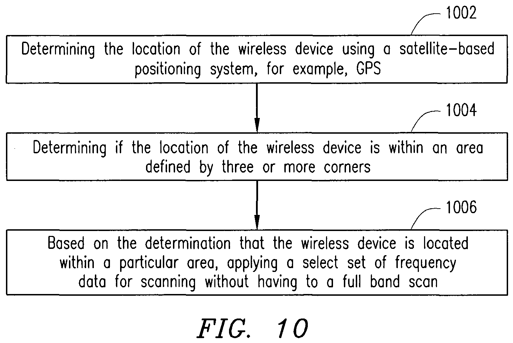

FIG. 10 depicts a flowchart associated with a presently preferred exemplary embodiment for accelerating network selection using a suitable location-finding technique such as Global Positioning System (GPS) in conjunction with the database structure 900 described above. By way example, a GPS-based scheme will be described below, although it should be understood that the teachings of the present disclosure may be practiced in conjunction with other known or heretofore unknown satellite-based positioning schemes that may be or become prevalent in other countries. As is well known, GPS receivers provide a method for determining location anywhere on the earth, and using a technique known as differential GPS (DGPS), accurate automated position tracking is possible for any device equipped with appropriate GPS receiver functionality. Essentially, a GPS receiver is operable to receive radio signals that are broadcast by a constellation of satellites (presently 24 satellites) operated by the United States Department of Defense (DoD). Orbiting around the earth at an altitude of 12,550 miles, these satellites are in predictable locations, wherein each satellite broadcasts almanac information containing the position of all satellites in the constellation. The number of channels in a GPS receiver determines how many satellites it can simultaneously see. For example, whereas two-channel receiver is capable of receiving signals from only two satellites, a 12-channel receiver can lock onto signals from as many as 12 satellites - the maximum available at any given moment. Each GPS satellite continuously broadcasts two radio signals on separate L-band frequencies (1.0 GHz to 2.0 GHz). The L1 signal (transmitted at 1575.42 MHz) carries two codes, a Coarse/Acquisition (C/A) code and a Precision (P) code. The L2 signal (transmitted at 1227.60 MHz) carries only the P code, which is encrypted so that only the military and other authorized receivers can interpret it. For civilian purposes, the L1 signaling is used for effectuating what is known as the Standard Positioning Service, whose accuracy can be improved via differential correction techniques.

Accordingly, for purposes of the present disclosure, a wireless UE device including appropriate SBPS receiver capability is operable to monitor its location when it is powered up or while being used. At block 1002, a suitably-equipped wireless device determines its location, whereupon suitable location interrogation logic of the wireless device determines if the location of the wireless device is within an area defined by three or more corners (block 1004) by querying a location database such as the database structure 900 described in detail hereinabove. Based on the determination that the wireless UE device is located within a particular area, a subset of appropriate frequency data (i.e., a select set corresponding to the particular geographic area within which the device is located) is applied for scanning (either initial scanning or background scanning). The wireless device then uses the select frequency data for performing selective scanning in order to locate a suitable network for service without having to do a full band scan (block 1006). Furthermore, where multiple networks are located by the wireless device via selective scanning, one or more appropriate prioritization schemes may be applied for choosing a particular network, which may involve, additionally or alternatively, some sort of manual selection as well.

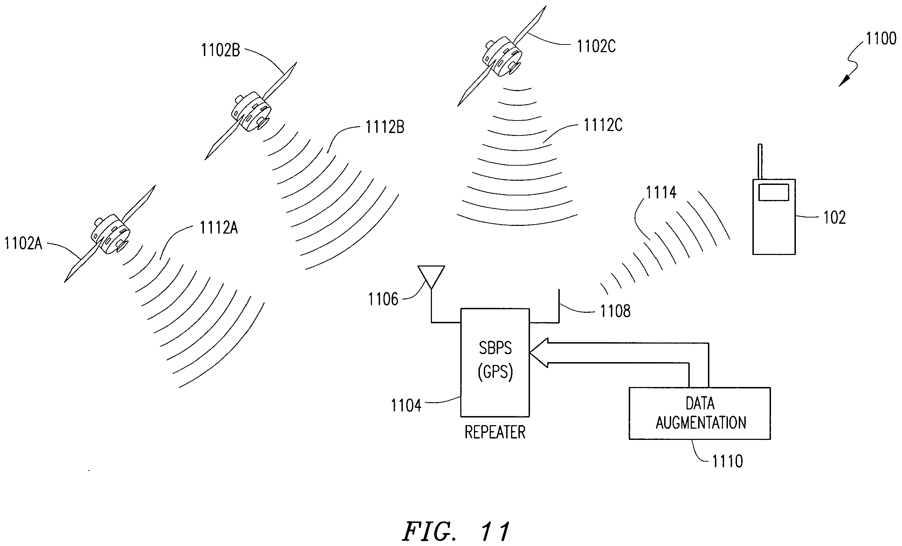

Referring now to FIG. 11, depicted therein is yet another exemplary embodiment of the present disclosure. Reference numeral 1100 refers to a system involving one or more strategically located SBPS repeaters 1104, e.g., such service areas as airport terminals, tunnel exits, tall buildings, etc., that are operable to receive broadcast SBPS signals and generate a suitable repeater beacon signal that is broadcast to the service area. As illustrated, reference numerals 1102A, 1102B and 1102C refer to three satellites that broadcast appropriate SBPS/GPS signals 1112A, 1112B, and 1112C, respectively, that are received by an active SBPS/GPS antenna 1106 operably coupled to the repeater 1104. Essentially, the SBPS/GPS repeater 1104 is a rebroadcast capability for extending coverage (for up to 300 feet or thereabouts) to places where satellite signals typically cannot reach, such as the inside of buildings. The data channel of the SBPS/GPS signal is modified by a data augmentation mechanism 1110 associated with the repeater 1104 so as to include various types of information, e.g., local wireless carrier information comprising available PLMN lists and WiFi HotSpot service providers (i.e., network advertisement information), frequency data, and the like. The modified SBPS/GPS signal 1114 is then broadcast via an antenna 1108 similar to a beacon service, which is received by the wireless device 102 equipped with suitable receiver functionality. Because the repeater signal 1114 is significantly stronger than any satellite-generated signal, both location and available wireless assets would be quickly available to the wireless device 102, which can readily begin service with the appropriate network selected based on the frequency data encoded in the modified repeater signal 1114. Additionally, interfacing with other stored information such as the various database structures described in detail in the foregoing sections may also be facilitated for purposes of accelerating network selection.

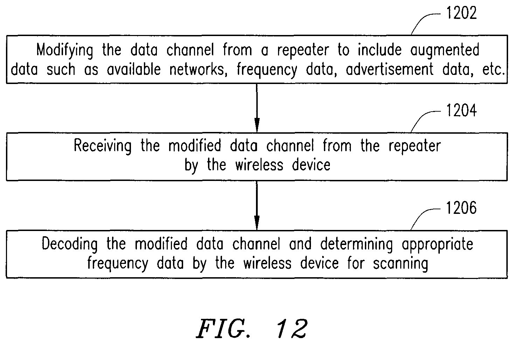

FIG. 12 depicts at least some of the various operations involved in the scheme set forth above. At block 1202, the data channel from an SBPS repeater is modified to include augmented data such as available networks, frequency data, advertisement data, etc. Upon receiving the modified data channel from the repeater by the wireless device (block 1204), suitable SBPS beacon service receiver functionality of the device is operable to decode the modified data channel and determines appropriate frequency data for selective scanning (block 1206).

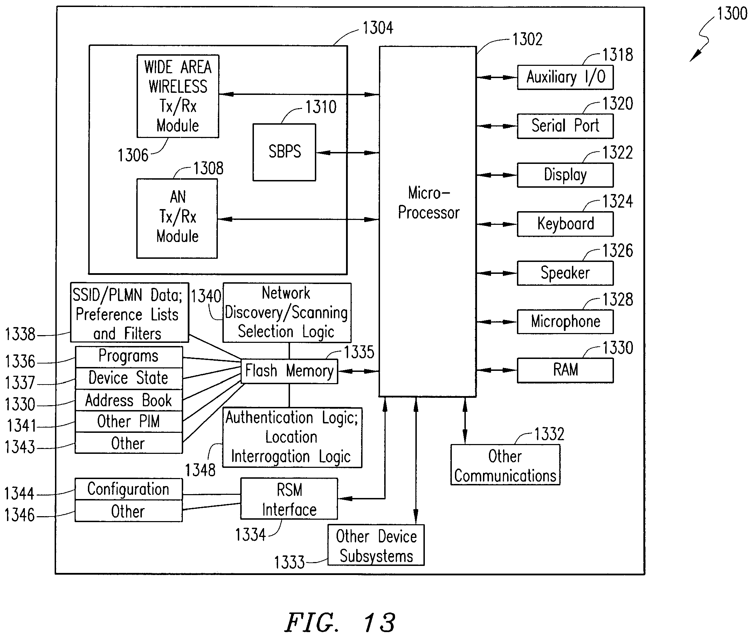

FIG. 13 depicts a block diagram of an embodiment of a wireless device or UE/ME device 1300 operable to accelerate network selection according to the teachings of the present patent disclosure. It will be recognized by those skilled in the art upon reference hereto that although an embodiment of UE 102 may comprise an arrangement similar to one shown in FIG. 13, there can be a number of variations and modifications, in hardware, software or firmware, with respect to the various modules depicted. Accordingly, the arrangement of FIG. 13 should be taken as illustrative rather than limiting with respect to the embodiments of the present patent disclosure. A microprocessor 1302 providing for the overall control of UE 1300 is operably coupled to a communication subsystem 1304 which includes transmitter/receiver (transceiver) functionality for effectuating multi-mode scanning and communications over a plurality of bands. By way of example, a wide area wireless Tx/Rx module 1306 and a wireless AN Tx/Rx module 1308 are illustrated. Also, a suitable SBPS/GPS receiver module 1310 is provided for effectuating satellite-based communications as described hereinabove. Although not particularly shown, each Tx/Rx module may include other associated components such as one or more local oscillator (LO) modules, RF switches, RF bandpass filters, A/D and D/A converters, processing modules such as digital signal processors (DSPs), local memory, etc. As will be apparent to those skilled in the field of communications, the particular design of the communication subsystem 1304 may be dependent upon the communications networks with which the UE device is intended to operate. In one embodiment, the communication subsystem 1304 is operable with both voice and data communications.

Microprocessor 1302 also interfaces with further device subsystems such as auxiliary input/output (I/O) 1318, serial port 1320, display 1322, keyboard 1324, speaker 1326, microphone 1328, random access memory (RAM) 1330, a short-range communications subsystem 1332, and any other device subsystems generally labeled as reference numeral 1333. To control access, an RSM (SIM/RUIM/USIM) interface 1334 is also provided in communication with the microprocessor 1302. In one implementation, RSM interface 1334 is operable with an RSM card having a number of key configurations 1344 and other information 1346 such as identification and subscriber-related data as well as one or more SSID/PLMN lists, location databases and filters described in detail hereinabove.

Operating system software and other control software may be embodied in a persistent storage module (i.e., non-volatile storage) such as Flash memory 1335. In one implementation, Flash memory 1335 may be segregated into different areas, e.g., storage area for computer programs 1336 as well as data storage regions such as device state 1337, address book 1339, other personal information manager (PIM) data 1341, and other data storage areas generally labeled as reference numeral 1343. Additionally, appropriate network discovery/selection logic 1340 may be provided as part of the persistent storage for executing the various network discovery/scanning and accelerated selection procedures set forth in the preceding sections. Additionally or alternatively, another logic module 1348 is provided for facilitating home network authentication (where implemented), location interrogation, etc. Associated therewith is a storage module 1338 for storing the SSID/PLMN lists, location-based selection/scanning filters, capability indicators, et cetera, also described in detail hereinabove.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present disclosure as set forth in the following claims.

## Claims

1. A method for accelerating network selection by a wireless UE device (102), comprising:
determining (1002) said wireless UE's location by using a satellite-based positioning system;
determining (1004) that said wireless UE device's location is within an area defined by a plurality of corners, each corner being defined as a longitude coordinate and a latitude coordinate, by interrogating a location database (900) stored on the device, wherein the location database (900) is populated with a plurality of areas, each area being identified by a plurality of corners defined as a longitude coordinate and a latitude coordinate, wherein each area is associated with a corresponding frequency data item; and
based on determining (1004) that said wireless UE device's location is within a particular area, downloading a particular frequency data item from a network node to said wireless UE device and applying (1006) said particular frequency data item for selective scanning (1006) by said wireless UE device (102), thereby avoiding a full band scan for locating a network.

2. The method for accelerating network selection by a wireless UE device (102) as recited in claim 1, wherein said selective scanning (1006) is performed as one of an initial scan procedure and a background scan procedure.

3. The method for accelerating network selection by a wireless UE device (102) as recited in claim 1 or claim 2, wherein said selective scanning (1006) is performed upon power-up of said wireless UE device (102) or upon losing coverage of a network with which said wireless UE device (102) was previously registered.

4. The method for accelerating network selection by a wireless UE device (102) as recited in claim 1, claim 2 or claim 3, further comprising: if multiple networks are located by said wireless UE device (102) via selective scanning (1006), applying a prioritization scheme for choosing a particular network for service.

5. The method for accelerating network selection by a wireless UE device (102) as recited in claim 1, claim 2 or claim 3, further comprising: if multiple networks are located by said wireless UE device (102) via selective scanning (1006), manually choosing a particular network for service.

6. A system for accelerating network selection by a wireless user equipment (UE) device (102), comprising:
means for determining (1002) said wireless UE's location by using a satellite-based positioning system;
means for determining (1004) if said wireless UE device's location is within an area defined by a plurality of corners, each corner being defined as a longitude coordinate and a latitude coordinate, by interrogating a location database (900) stored on the device, wherein the location database (900) is populated with a plurality of areas, each area being identified by a plurality of corners defined as a longitude coordinate and a latitude coordinate, wherein each area is associated with a corresponding frequency data item; and
based on determining (1004) that said wireless UE device's location is within a particular area, means for downloading a particular frequency data item from a network node to said wireless UE device and applying (1006) said particular frequency data item for selective scanning (1006) by said wireless UE device (102), thereby avoiding a full band scan for locating a network.

7. The system for accelerating network selection by a wireless UE device (102) as recited in claim 6, wherein said selective scanning (1006) is performed as one of an initial scan procedure and a background scan procedure.

8. The system for accelerating network selection by a wireless UE device (102) as recited in claim 6 or claim 7, wherein said selective scanning (1006) is performed upon power-up of said wireless UE device (102) or upon losing coverage of a network with which said wireless UE device (102) was previously registered.

9. The system for accelerating network selection by a wireless UE device (102) as recited in claim 6, claim 7 or claim 8, further comprising: means for applying a prioritization scheme to facilitate selection of a particular network for service if multiple networks are located by said wireless UE device (102) via selective scanning (1006).

10. The system for accelerating network selection by a wireless UE device (102) as recited in claim 6, claim 7 or claim 8, further comprising: means for manually choosing a particular network for service if multiple networks are located by said wireless UE device (102) via selective scanning (1006).

11. A wireless user equipment, UE, device (1300), comprising:
a logic structure for determining said wireless UE's location by using a satellite-based positioning system;
a logic structure (1338, 1348) for determining if said wireless UE device's location is within an area defined by a plurality of corners, each corner being defined as a longitude coordinate and a latitude coordinate, by interrogating a location database (900) stored on the device, wherein the location database (900) is populated with a plurality of areas, each area being defined by a plurality of corners defined as a longitude coordinate and a latitude coordinate, wherein each area is associated with a corresponding frequency data item; and
a logic structure (1340) for, based on determining (1004) that said wireless UE device's location is within a particular area, downloading a particular frequency data item from a network node to said wireless UE device and applying said particular frequency data item for selective scanning by said wireless UE device (1300).

## Patentansprüche

1. Verfahren zum Beschleunigen einer Netzauswahl durch eine drahtlose UE-Vorrichtung (102), umfassend:
Ermitteln (1002) des Standorts des drahtlosen UE unter Nutzung eines satellitengestützten Positionierungssystems;
Ermitteln (1004), dass der Standort der drahtlosen UE-Vorrichtung sich innerhalb eines Bereichs befindet, der durch eine Vielzahl von Ecken definiert ist, wobei jede Ecke als eine Längenkoordinate und eine Breitenkoordinate definiert ist, durch Abfragen einer Standortdatenbank (900), die auf der Vorrichtung gespeichert ist, wobei die Standortdatenbank (900) mit einer Vielzahl von Bereichen bestückt ist, jeder Bereich durch eine Vielzahl von Ecken identifiziert ist, die als eine Längenkoordinate und eine Breitenkoordinate definiert sind, wobei jeder Bereich einem entsprechenden Frequenzdatenelement zugeordnet ist; und
basierend auf dem Ermitteln (1004), dass der Standort der drahtlosen UE-Vorrichtung sich innerhalb eines bestimmten Bereichs befindet, Herunterladen eines bestimmten Frequenzdatenelements von einem Netzknoten auf die drahtlose UE-Vorrichtung und Anwenden (1006) des bestimmten Frequenzdatenelements zum selektiven Abtasten (1006) durch die drahtlose UE-Vorrichtung (102), sodass dadurch eine vollständige Band-Abtastung zum Orten eines Netzes vermieden wird.

2. Verfahren zum Beschleunigen einer Netzauswahl durch eine drahtlose UE-Vorrichtung (102) nach Anspruch 1, wobei das selektive Abtasten (1006) als eine aus einer ersten Abtastprozedur und einer Hintergrund-Abtastprozedur durchgeführt wird.

3. Verfahren zum Beschleunigen einer Netzauswahl durch eine drahtlose UE-Vorrichtung (102) nach Anspruch 1 oder Anspruch 2, wobei das selektive Abtasten (1006) beim Einschalten der drahtlosen UE-Vorrichtung (102) oder beim Verlieren der Abdeckung eines Netzes, bei dem die drahtlose UE-Vorrichtung (102) vorher registriert war, durchgeführt wird.

4. Verfahren zum Beschleunigen einer Netzauswahl durch eine drahtlose UE-Vorrichtung (102) nach Anspruch 1, Anspruch 2 oder Anspruch 3, ferner umfassend: wenn mehrere Netze durch die drahtlose UE-Vorrichtung (102) über selektives Abtasten (1006) geortet werden, Anwenden eines Priorisierungsschemas zum Auswählen eines bestimmten Netzes.

5. Verfahren zum Beschleunigen einer Netzauswahl durch eine drahtlose UE-Vorrichtung (102) nach Anspruch 1, Anspruch 2 oder Anspruch 3, ferner umfassend: wenn mehrere Netze durch die drahtlose UE-Vorrichtung (102) über selektives Abtasten (1006) geortet werden, manuelles Auswählen eines bestimmten Netzes für Dienste.

6. System zum Beschleunigen einer Netzauswahl durch eine drahtlose Benutzergerät- (UE-)Vorrichtung (102), umfassend:
Mittel zum Ermitteln (1002) des Standorts des drahtlosen UE unter Nutzung eines satellitengestützten Positionierungssystems;
Mittel zum Ermitteln (1004), ob der Standort der drahtlosen UE-Vorrichtung sich innerhalb eines Bereichs befindet, der durch eine Vielzahl von Ecken definiert ist, wobei jede Ecke als eine Längenkoordinate und eine Breitenkoordinate definiert ist, durch Abfragen einer Standortdatenbank (900), die auf der Vorrichtung gespeichert ist, wobei die Standortdatenbank (900) mit einer Vielzahl von Bereichen bestückt ist, jeder Bereich durch eine Vielzahl von Ecken identifiziert ist, die als eine Längenkoordinate und eine Breitenkoordinate definiert sind, wobei jeder Bereich einem entsprechenden Frequenzdatenelement zugeordnet ist; und
basierend auf dem Ermitteln (1004), dass der Standort der drahtlosen UE-Vorrichtung sich innerhalb eines bestimmten Bereichs befindet, Mittel zum Herunterladen eines bestimmten Frequenzdatenelements von einem Netzknoten auf die drahtlose UE-Vorrichtung und Anwenden (1006) des bestimmten Frequenzdatenelements zum selektiven Abtasten (1006) durch die drahtlose UE-Vorrichtung (102), sodass dadurch eine vollständige Band-Abtastung zum Orten eines Netzes vermieden wird.

7. System zum Beschleunigen einer Netzauswahl durch eine drahtlose UE-Vorrichtung (102) nach Anspruch 6, wobei das selektive Abtasten (1006) als eine aus einer ersten Abtastprozedur und einer Hintergrund-Abtastprozedur durchgeführt wird.

8. System zum Beschleunigen einer Netzauswahl durch eine drahtlose UE-Vorrichtung (102) nach Anspruch 6 oder Anspruch 7, wobei das selektive Abtasten (1006) beim Einschalten der drahtlosen UE-Vorrichtung (102) oder beim Verlassen der Abdeckung eines Netzes, bei dem die drahtlose UE-Vorrichtung (102) vorher registriert war, durchgeführt wird.

9. System zum Beschleunigen einer Netzauswahl durch eine drahtlose UE-Vorrichtung (102) nach Anspruch 6, Anspruch 7 oder Anspruch 8, ferner umfassend: Mittel zum Anwenden eines Priorisierungsschemas, um die Auswahl eines bestimmten Netzes für Dienste zu erleichtern, wenn mehrere Netze von der drahtlosen UE-Vorrichtung (102) über selektives Abtasten (1006) geortet werden.

10. System zum Beschleunigen einer Netzauswahl durch eine drahtlose UE-Vorrichtung (102) nach Anspruch 6, Anspruch 7 oder Anspruch 8, ferner umfassend: Mittel zum manuellen Auswählen eines bestimmten Netzes für Dienste, wenn mehrere Netze von der drahtlosen UE-Vorrichtung (102) über selektives Abtasten (1006) geortet werden.

11. Drahtlose Benutzergerät-, UE-, Vorrichtung (1300), umfassend:
eine logische Struktur zum Ermitteln des Standorts der drahtlosen UE unter Nutzung eines satellitengestützten Positionierungssystems;
eine logische Struktur (1338, 1348) zum Ermitteln, ob der Standort der drahtlosen UE-Vorrichtung sich innerhalb eines Bereichs befindet, der durch eine Vielzahl von Ecken definiert ist, wobei jede Ecke als eine Längenkoordinate und eine Breitenkoordinate definiert ist, durch Abfragen einer Standortdatenbank (900), die auf der Vorrichtung gespeichert ist, wobei die Standortdatenbank (900) mit einer Vielzahl von Bereichen bestückt ist, jeder Bereich durch eine Vielzahl von Ecken definiert wird, die als eine Längenkoordinate und eine Breitenkoordinate definiert sind, wobei jeder Bereich einem entsprechenden Frequenzdatenelement zugeordnet ist; und
eine logische Struktur (1340) zum Herunterladen eines bestimmten Frequenzdatenelements von einem Netzknoten auf die drahtlose UE-Vorrichtung und Anwenden des bestimmten Frequenzdatenelements zum selektiven Abtasten durch die drahtlose UE-Vorrichtung (1300), basierend auf dem Ermitteln (1004), dass der Standort der drahtlosen UE-Vorrichtung sich innerhalb eines bestimmten Bereichs befindet.

## Revendications

1. Procédé pour accélérer la sélection d'un réseau par un dispositif EU sans fil (102), comprenant les opérations consistant à :
déterminer (1002) ledit emplacement d'EU sans fil en utilisant un système de positionnement satellitaire ;
déterminer (1004) que ledit emplacement du dispositif EU sans fil est situé dans une zone définie par une pluralité de coins, chaque coin étant défini par une coordonnée de longitude et une coordonnée de latitude, en interrogeant une base de données d'emplacements (900) stockée sur le dispositif, la base de données d'emplacements (900) étant renseignée avec une pluralité de zones, chaque zone étant identifiée par une pluralité de coins définis par une coordonnée de longitude et une coordonnée de latitude, chaque zone étant associée à un élément de données de fréquence correspondant ; et
sur la base de la détermination (1004) du fait que ledit emplacement du dispositif EU sans fil est situé dans une zone particulière, télécharger un élément de données de fréquence particulier à partir d'un noeud de réseau dans ledit dispositif EU sans fil et appliquer (1006) ledit élément de données de fréquence particulier pour un balayage sélectif (1006) par ledit dispositif EU sans fil (102), ce qui évite ainsi un balayage de large bande pour la localisation d'un réseau.

2. Procédé pour accélérer la sélection d'un réseau par un dispositif EU sans fil (102) selon la revendication 1, dans lequel ledit balayage sélectif (1006) est effectué en tant que l'une d'une procédure de balayage initiale et d'une procédure de balayage d'arrière-plan.

3. Procédé pour accélérer la sélection d'un réseau par un dispositif EU sans fil (102) selon la revendication 1 ou la revendication 2, dans lequel ledit balayage sélectif (1006) est effectué suite à la mise en service dudit dispositif EU sans fil (102) ou suite à une perte de couverture d'un réseau sur lequel ledit dispositif EU sans fil (102) était antérieurement enregistré.

4. Procédé pour accélérer la sélection d'un réseau par un dispositif EU sans fil (102) selon la revendication 1, la revendication 2 ou la revendication 3, comprenant en outre l'étape consistant à : si de multiples réseaux sont localisés par ledit dispositif EU sans fil (102) via un balayage sélectif (1006), appliquer un schéma de priorisation pour choisir un réseau particulier pour le service.

5. Procédé pour accélérer la sélection d'un réseau par un dispositif EU sans fil (102) selon la revendication 1, la revendication 2 ou la revendication 3, comprenant en outre l'étape consistant à : si de multiples réseaux sont localisés par ledit dispositif EU sans fil (102) via un balayage sélectif (1006), choisir manuellement un réseau particulier pour le service.

6. Système pour accélérer la sélection d'un réseau par un dispositif d'équipement utilisateur (UE) sans fil (102), comprenant :
un moyen pour déterminer (1002) ledit emplacement d'EU sans fil par utilisation d'un système de positionnement satellitaire ;
un moyen pour déterminer (1004) si ledit emplacement du dispositif EU sans fil est situé dans une zone définie par une pluralité de coins, chaque coin étant défini par une coordonnée de longitude et une coordonnée de latitude, par interrogation d'une base de données d'emplacements (900) stockée sur le dispositif, la base de données d'emplacements (900) étant renseignée avec une pluralité de zones, chaque zone étant identifiée par une pluralité de coins définis par une coordonnée de longitude et une coordonnée de latitude, chaque zone étant associée à un élément de données de fréquence correspondant ; et
sur la base de la détermination (1004) du fait que ledit emplacement du dispositif EU sans fil est situé dans une zone particulière, un moyen pour télécharger un élément de données de fréquence particulier à partir d'un noeud de réseau dans ledit dispositif EU sans fil et appliquer (1006) ledit élément de données de fréquence particulier pour un balayage sélectif (1006) par ledit dispositif EU sans fil (102), ce qui évite ainsi un balayage de large bande pour la localisation d'un réseau.

7. Système pour accélérer la sélection d'un réseau par un dispositif EU sans fil (102) selon la revendication 6, dans lequel ledit balayage sélectif (1006) est effectué en tant que l'une d'une procédure de balayage initiale et d'une procédure de balayage d'arrière-plan.

8. Système pour accélérer la sélection d'un réseau par un dispositif EU sans fil (102) selon la revendication 6 ou la revendication 7, dans lequel ledit balayage sélectif (1006) est effectué suite à la mise en service dudit dispositif EU sans fil (102) ou suite à une perte de couverture d'un réseau sur lequel ledit dispositif EU sans fil (102) était antérieurement enregistré.

9. Système pour accélérer la sélection d'un réseau par un dispositif EU sans fil (102) selon la revendication 6, la revendication 7 ou la revendication 8, comprenant en outre : des moyens pour appliquer un schéma de priorisation pour faciliter la sélection d'un réseau particulier pour le service si de multiples réseaux sont localisés par ledit dispositif EU sans fil (102) via un balayage sélectif (1006) .

10. Système pour accélérer la sélection d'un réseau par un dispositif EU sans fil (102) selon la revendication 6, la revendication 7 ou la revendication 8, comprenant en outre : un moyen pour choisir manuellement un réseau particulier pour le service si de multiples réseaux sont localisés par ledit dispositif EU sans fil (102) via un balayage sélectif (1006).

11. Dispositif d'équipement utilisateur, EU, sans fil (1300), comprenant :
une structure logique pour déterminer ledit emplacement d'EU sans fil par utilisation d'un système de positionnement satellitaire ;
une structure logique (1338, 1348) pour déterminer si ledit emplacement du dispositif EU sans fil est situé dans une zone définie par une pluralité de coins, chaque coin étant défini par une coordonnée de longitude et une coordonnée de latitude, par interrogation d'une base de données d'emplacements (900) stockée sur le dispositif, la base de données d'emplacements (900) étant renseignée avec une pluralité de zones, chaque zone étant identifiée par une pluralité de coins définis par une coordonnée de longitude et une coordonnée de latitude, chaque zone étant associée à un élément de données de fréquence correspondant ; et
une structure logique (1340) pour, sur la base de la détermination (1004) du fait que ledit emplacement du dispositif EU sans fil est situé dans une zone particulière, télécharger un élément de données de fréquence particulier à partir d'un noeud de réseau dans ledit dispositif EU sans fil et appliquer ledit élément de données de fréquence particulier pour un balayage sélectif par ledit dispositif EU sans fil (1300).
